# EUROPEAN PATENT APPLICATION

(11) **EP 4 518 085 A1**
(43) Date of publication of application: **05.03.2025**
(21) Application number: 23195009.8
(22) Date of filing: 04.09.2023
(51) Int. Cl.: H02J 7/00

(54) **CHARGER AND ENERGY SUPPLY SYSTEM**

(71) Applicant: Hilti Aktiengesellschaft, 9494 Schaan (LI)
(72) Inventor: Musolino, Vincenzo, 9470 Buchs (CH); Dippon, Michael, 9472 Grabs (CH)
(74) Representative: Hilti Aktiengesellschaft Corporate Intellectual Property

(57) **Abstract**

The invention relates to a charger (22) for charging a rechargeable power tool battery (14). It is characterized in that the charger (22) is configured to charge a battery (14) depending on at least one of the use of the battery (14), the use of a power tool (11) the battery (14) previously has been or is to be connected to, or a property of the power tool (11). Furthermore, the invention also relates to an energy supply system (60). By means of the invention, task may be carried out on construction sites particularly efficiently.

## Description

The present invention relates to a charger for charging a rechargeable battery and to an energy supply system.

Work efficiency is one of the key success factors in building construction. Work efficiency has been increased by using cordless power tools. Such cordless power tools enable a worker on a construction site to move around quickly and to work in areas difficult to reach and without the need for a corded power supply. However, the batteries of cordless power tools have to be charged regularly. This forces the worker to interrupt his work and to wait for the battery to be recharged again. One option to overcome this problem is to use a plurality of batteries, so that while some of the batteries are charged another one can be used for supplying power to the power tool. In high-power applications, e. g. in applications having a rated power of 1 kW or more, the batteries have to be charged at very high charging speeds or a large set of batteries is needed in order to be able to work continuously. Usually, high charging speeds may reduce the lifespan of batteries, which, in turn, increases effective costs of work. Charging several batteries simultaneously requires several chargers, which further increases the effective costs of work and costs of a fleet of power tools and accessories required on the construction site.

Therefore, it is an object of the invention to provide cost-efficient means for executing building construction works using cordless power tools.

This is achieved in a number of aspects of the present invention, in which a first aspect is a charger for charging a rechargeable power tool battery, wherein the charger is configured to charge a battery depending on at least one of a use of the battery, a use of a power tool the battery previously has been or is to be connected to, or a property of the power tool.

Thus, a basic idea behind the invention is that the total costs of execution not only depend on the charging but on a whole cycle comprising executing some work while discharging the battery, cooling down the battery, the power tool and/or the charger, charging the battery and, if necessary, cooling down the battery again, so that the next cycle can start. Of course, in cold environments it may also be required to heat the battery before, while, or after discharging or charging.

Moreover, the lifespan of the battery and, hence, the effective costs are influenced by the way the battery is cooled down or the way the battery is charged. Having data about at least some of these aspects, may therefore help to optimize charging. For example, in cases in which low-power power tools like construction site air cleaners or vacuum cleaners for removing dust, which are known to run several hours on one battery, are used, the charging speed for charging a second battery may be lower than in cases of high-power applications, for example chiselling tools or hammer drills, in which the high-power power tools usually run only fractions of an hour on one battery. So for low-power applications the battery can be charged more carefully, thus preserving its lifespan and reducing equipment costs. In the latter case waiting times for the worker to wait until the next battery is charged may be minimised as far as possible, so a total working time of a worker executing tasks related to the high-power application is minimised, which, again may reduce the total costs of the works.

So it is possible to simultaneously optimise the lifespan of the battery as well as their effective availability for executing the respective construction works.

In the following, a **"battery availability"** may be defined as a fraction of time during which a battery may be used with a power tool, that is the time during which the battery is discharged, as a proportion of the total length of the cycle comprising discharging, charging, and thermally reconfiguring the battery into a status in which a next cycle can start.

One aspect of this cycle relates to a temperature of the battery and, eventually, the power tool. It is thus favourable if the charger comprises at least one of an active heating device or an active cooling device for actively heating or cooling the battery. In regions having European ambient temperatures the battery usually heats up during discharging and during charging and, thus, requires to be cooled down. In cold regions, like northern Canada, Siberia, or the like, the intrinsic warming up during discharging or charging may not be sufficient, so that an active heating may help to accelerate to keep or to reconfigure the battery into a status needed for the next cycle.

Another aspect of the invention is that the charger may be configured to forecast an application, for example a subsequent use of the battery or of a next power tool the battery will be connected to. A good and simple predictor to predict such a subsequent use or the next power tool is a previous use or a previously connected power tool.

Hence, to increase the total battery availability while not detrimenting the lifespan of the battery, the charger may be configured such that an average charging speed correlates to an average discharging speed of the battery when discharged by the power tool. By correlating the average discharging speed to the charging speed the charger may take care of the different requirements for high-power versus low-power applications.

The charger may take care of such aspects in a more direct way if the charger is configured to charge depending on the type of the power tool or a type of an application of the power tool. In particular, the type of power tool or the type of the application of the power tool may be used for predicting a power consumption, a discharging time, a discharging end temperature, an allowed discharging start temperature, or the like. Knowing, for example, that the application to come is a low-power application may allow to start the next cycle at a higher battery temperature then in the case of a high-power application, because during a low-power application it can be expected that the battery does not heat up as much as in the case of a high-power application and thus that the battery may remain below a critical threshold temperature although starting at a higher discharging start temperature.

The total time of charging, including the time for cooling down the battery, can also be reduced if the charger is configured to cool down the battery while charging, if a temperature of the battery is above a discharging start temperature. In some cases, the charger may be configured to charge with a reduced charging speed that is chosen such that the battery is cooling down despite being charged. This approach may take into account that the temperature of the battery usually increases proportionally to the square of the charging current whereas the charging time only increases anti-proportionately to the charging current. Thus, it may happen that the time during which the battery is charged is prolonged but that the total time including the cooling down is shorter than if the battery was charged at a higher charging speed.

The charger may be configured to define the discharging start temperature for the next cycle depending on certain circumstances. In particular, the charger may be configured to end charging and / or a cool down at an allowed discharging start temperature, wherein the allowed discharging start temperature depends on an ambient temperature, the type of power tool and / or the type of application of the power tool. In cases of low ambient temperatures or low-power applications the discharging start temperature may be set to a higher value than, for example, in cases of normal or high ambient temperatures or high-power applications. Besides shortening the total cycle time this may also help to reduce the power consumption of the charger, in particular of its heating or cooling device.

According to some embodiments, the charger may be configured to start charging at a charging start temperature, wherein a charging start temperature may depend on the ambient temperature, the type of the power tool and / or the type of application of the power tool. For example, for low-power applications, the range of temperatures of the battery may be at a higher level and smaller then for high-power applications. So, in the case of low-power applications the charger can start at a higher charging start temperature, charge slowly and finish charging at similar or lower charging temperatures compared to the case of high-power applications. So at least for low-power applications the battery availability may be increased and, additionally, the life span of the battery can be preserved or even prolonged comparative to the cycle times of high-power applications.

The charger may be configured to charge the battery depending on at least one of a daytime, a day of year, a week number of year, a month, a season or a location of at least one of the power tool, the battery, or the charger. This can help to further optimise the energy efficiency of the charger and / or the lifespan of the battery being charged. If, for example, a direct measurement of the ambient temperature is not available, a forecast of it may rely on the season. Furthermore, the charger may charge depending on the daytime. In particular, the speed of charging may be reduced when charging during night-time or during breaks in which the worker does not work, for example during lunch, or on Fridays, Saturdays or Sundays, in regions where the Fridays, the Saturdays, or, respectively, the Sundays are public holidays.

The charger may comprise a battery data interface to communicate with the battery, for example for gathering data relating to the use of the battery, and thus, implicitly, of the power tool. Examples of such data may be a speed of discharging or a total discharging time, an average power during discharging, or the like.

In some embodiments the charger may be configured to communicate directly with the power tool the battery has been connected to or is supposed to be connected to. Therefore, it may be advantageous, if the charger comprises a power tool data interface to communicate with the power tool, in particular for gathering data relating to the power tool. Such data may comprise a type or class of the power tool, technical data like maximum power, working modes, for example if the power tool is a drilling tool, if the power tool has a hammering mode or not, or the like.

The more devices, in particular batteries, are to be handled by a worker, the more often the worker has to interrupt the work, for example in order to change batteries to be recharged by the charger. Therefore, in order to keep this number of devices low, the charger may be configured to charge with a charging speed of at least 2C. The charging speed may refer to an average charging speed. Alternatively, or additionally, it may refer to a peak charging speed.

In some embodiments the charger may be configured to charge the battery depending on at least one of a set of batteries or a set of power tools. The charger may be configured to consider a whole fleet of devices available to the worker. The charging may depend on, for example, the availability of other chargers, so that several batteries may be charged simultaneously. It may depend on the total number of batteries available, so that a first, currently unused, battery may be charged at a high charging speed, whereas subsequent batteries may be charged slowly or as long as the first battery is not yet in use or not yet discharged. The charger may also be configured to consider the types of power tools present on the construction site. So it can improve its forecast about which type of power tool the battery will be used next. The sets may be defined manually or automatically, e. g. by detecting the presence of other batteries or power tools on the construction site. The charger may communicate with a fleet monitoring system. The fleet monitoring system may be configured to monitors which or if certain power tools of a fleet are in the construction site or in which status these power tools are.

The charger may have several charging docks for charging a plurality of batteries simultaneously. Additionally, or alternatively, the charger may be configured to emit a signal, for example an acoustic or an optical signal, for signalling that the battery in the charging dock should be exchanged or, respectively, that another battery can or should be charged.

In some embodiments the charger may be configured to charge the battery depending on a digital twin of at least one of the battery or the power tool. Hence, it is conceivable, that the charger charges the battery according to a history of use of the battery. The digital twin may also comprise data about the worker who was using the battery or about the power tool or the power tools the battery was used with. For example, the charger may detect that a specific worker executes specific tasks and, hence, needs specific power tools. So, depending on the fäorecast which worker is using the battery in the charging dock next, the charger may also vary the way of charging the battery, in particular it may vary the speed of charging or other properties like the charging start temperature, a discharging start temperature, or the state of charge at the end of the charging.

The charger may be connected to a remote computer system, for example a cloud computer system. The remote computer system may be configured to collect, aggregate and / or analyse data from one or more batteries, power tools and / or one or more construction sites.

Another aspect of the invention is an **energy supply system,** comprising a rechargeable power tool battery and a charger as previously described, wherein the battery has a heat transfer coefficient and a thermal capacity, wherein the charger is configured to charge the battery with a charging speed and / or to cool the battery with a cooling power, wherein the heat transfer coefficient, the heat capacity, the charging speed, and / or the cooling power are configured such that the energy supply system has a battery availability of at least 33% when the battery is discharged with a discharge power of at least 1 kW. Such an energy supply system provides a possibility to work continuously or at least substantially continuously requiring only a few batteries. As the number of batteries required is limited, less equipment is needed and, hence, equipment costs are reduced. The tasks can be carried out continuously using a cordless power tool, thus optimizing the total work efficiency.

A further reduction in equipment costs, even for high-power applications, is possible if the heat transfer coefficient, the thermal capacity, the charging speed, and / or the cooling power are configured such that the energy supply system has a battery availability of at least 50% when the battery is discharged with a discharge power of at least 1 kW. This enables a worker to work continuously having only two batteries. This case is even more favourable, as it means, that only one battery has to be charged while the other battery is being discharged.

In this context the power tool may refer to any mobile electric, cordless tool which is usually used on a building construction site. The power tool may therefore be a power tool for drilling, chiselling, grinding, sewing or milling, to name a few examples. Power tools may comprise handheld power tools as well as robotic power tools like cordless, electric construction robots. Power tools may also comprise measuring devices like total stations, laser range metres, line lasers, or the like. In some embodiments power tools may also comprise other cordless tools like portable lamps.

The invention will be described further, by way of example, with reference to the accompanying drawings which illustrate preferred embodiments thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

**In the drawings:**
- Figure 1: shows cordless power tools and a charger on a construction site;
- Figures 2, 3, and 4: show battery availability diagrams; and
- Figures 5 and 6: show a state of charge of a battery and its temperature in the course of a cycle of discharging and charging.

Same reference signs are used for functionally equivalent elements in all figures.

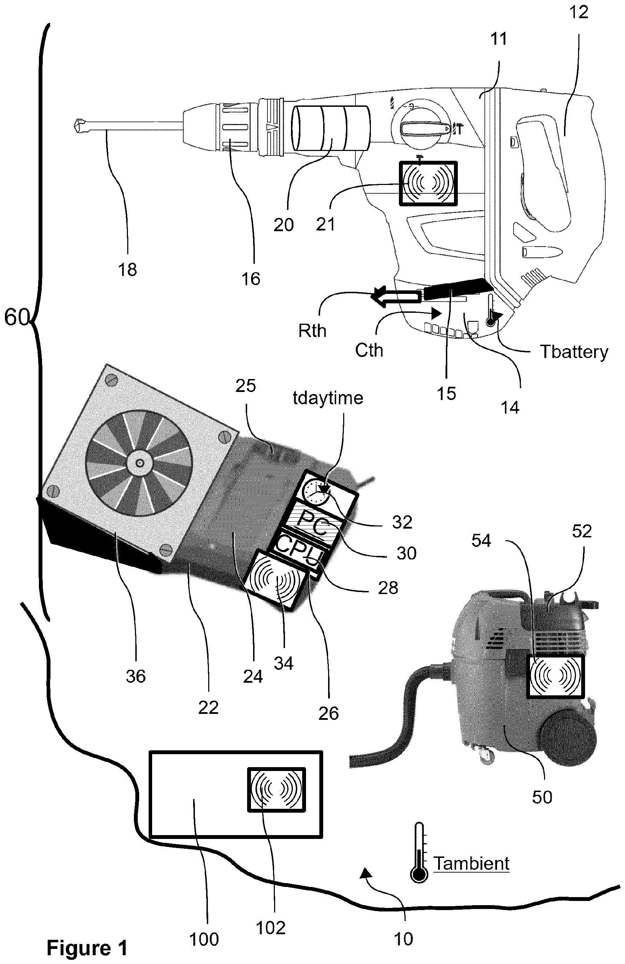

**Figure 1** schematically shows a construction site **10.** The construction site 10 has an ambient temperature **Tambient.**

On the construction site 10 is a cordless power tool **11.** The cordless power tool 11 is a hammer drill. The power tool 11 is in the form of a handheld device. It comprises a grip **12.** A battery **14** is attached to the power tool 11. It supplies the power tool 11 with electric energy. The battery 14 comprises an interface **15.** The interface 15 is configured to transmit electric power bidirectionally from and to the battery 14. Furthermore, the interface 15 is also configured to transmit data bidirectionally. By means of the interface 15 the battery 14 is configured to collect data from the power tool 11 to which it is connected. The data may comprise properties of the power tool 11 itself and or about use data of the power tool 11.

The battery 14 has a thermal resistance Rth and a thermal capacity **Cth.** These thermal parameters Rth, Cth may have an important influence on the thermal behaviour of the battery 14, and, hence, of its charging and / or discharging behaviour. Several characteristics of the battery 14 influence the effective thermal resistance Rth and the effective thermal capacity Cth. To design the battery 14 for a specific thermal resistance Rth and / or a specific thermal capacity Cth, one may, for example, choose or design an appropriate casing equipment of the battery 14, provide an appropriate thermal damping equipment inside the battery 14, introduce or eliminate heat propagation channels, add active air or liquid cooling, or the like. The design of the battery 14 may optimize the thermal resistance Rth and / or the thermal capacity Cth to maximize the battery availability.

The power tool 11 further comprises a tool holder **16** in which a tool **18** is mounted. The tool 18 may be a drill bit or a chisel bit, for example. The tool holder 16 and the tool 18 are driven by a motor arrangement **20.** The motor arrangement 20 is shown schematically in Figure 1. It is arranged inside the power tool 11.

The power tool 11 comprises a network adapter **21,** which may be a Wi-Fi network adapter.

A charger **22** comprises a battery dock **24** for docking a battery like the battery 14. The dock 24 comprises a battery interface **25.** The battery interface 25 is designed to match battery the interface 15 of the battery 14. It is configured to transfer electric power to the battery docked in the dock 24. It is also configured to transfer data bidirectionally to or from the docked battery. Furthermore, the charger 22 comprises a microcontroller **26.** The microcontroller 26 has a processor **28** and a memory **30,** in which programme code that is executable on the processor 28 is stored. The microcontroller 26 further comprises a clock **32** for providing a daytime **tdaytime** to the microcontroller 26 and, hence, to the charger 22. The microcontroller 26 may also comprise a receiver for a location-finding system, for example based on GPS, GLONASS, BAIDU, or the like.

The charger 22 further comprises a network adapter **34** which may be similar to the network adapter 21 of the power tool 11. Furthermore, the charger 22 comprises a cooling and heating device **36.** The cooling and heating device 36 is configured to cool or heat the battery 14 during charging when it is docked in the dock 24.

On the construction site 10 may be further cordless power tools. As an example, figure 1 shows a power tool **50** in the form of a cordless jobsite vacuum cleaner for collecting dust or the like from the construction site 10. The vacuum cleaner 50 also comprises a battery **52.** The battery 52 may be similar to the battery 14. In particular, the charger 22 and the battery 52 may also be designed to match each other, so that the battery 52, like the battery 14, may be charged by the charger 22. Like the other devices 11, 22, the power tool 50, that is the job site vacuum cleaner, also comprises a network adapter **54,** which may also be similar to the network adapters 21 or 34.

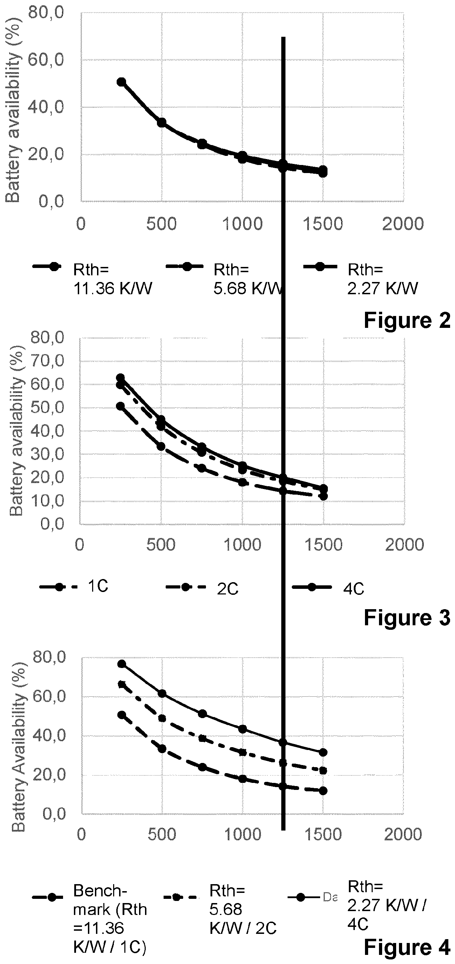

The rechargeable power tool 11, the battery 14 and the charger 22 form an energy supply system **60,** wherein the battery 14 has the heat transfer coefficient Rth, wherein the charger 22 is configured to charge the battery 14 with a charging speed and to cool the battery with a cooling power, wherein the heat transfer coefficient, the charging speed, and the cooling power are configured altogether, as will be described in more detail in regard to figures 2 to 4, such that the energy supply system has a battery availability of at least 33% when the battery 14 is discharged with a discharge power of at least 1 kW.

A presence or absence of devices is monitored by a fleet monitoring system **100.** The fleet monitoring system 100 comprises a network adapter **102,** which, favourably, may match with the other network adapters 21, 34, or 54. By means of the network adapter 102 the fleet monitoring system 100 may connect and communicate to the network adapters 21, 34, 54 of each one of the power tools 11, 50 or chargers 22 present on the construction side 10. It is configured to automatically detect whether a device like a power tool 11 or a charger 22 is added or removed from the construction site 10.

The microcontroller 26 of the charger 22 is configured, in particular by means of its memory 30 comprising the programme code, to charge the battery docked in the dock 24 in a way that considers not only battery-internal properties of the docked battery itself, but also data on a use of the docked battery 14 or of a power tool, the docked battery has been used with or is to be used with.

Referring to figures 2 to 7, this will be explained further in more detail.

**Figures 2, 3 and 4** show battery availabilities as functions of a thermal resistance Rth of the battery's surface (figure 2), of charging speed (figure 3), and of combinations of thermal resistances and charging speeds (figure 4). It may be noted that the batteries on which the embodiments shown in these Figures 2, 3, and 4 are based on, are supposed to have similar thermal capacities. Further embodiments may vary in their battery 14's thermal capacities.

As can be drawn from figure 2, increasing the thermal conductivity, i. e. reducing the thermal resistance Rth, has only a negligeable effect on the battery availability for high-power applications, for example having a continuous discharging power of 1.25 kW. Even with a thermal conductivity that is four times higher than the benchmark Rth=11.36 K/W, the battery availabilities still remain below 20%. Therefore, at least five and typically seven batteries are required for working continuously. It should be noted that this also means that a fleet of at least five batteries, four chargers and the power tool, that is a fleet of at least 10 devices, is required.

Surprisingly, and as shown in figure 4, if these two parameters are combined, then battery availabilities of approximately 40%, thus more than twice compared to the battery availabilities according to figure 2, may be achieved. Thus, it becomes possible to carry out the high-power applications continuously with only three batteries. Therefore, only three batteries, two chargers and the power tool, thus a fleet of six devices, is only needed for continuously working.

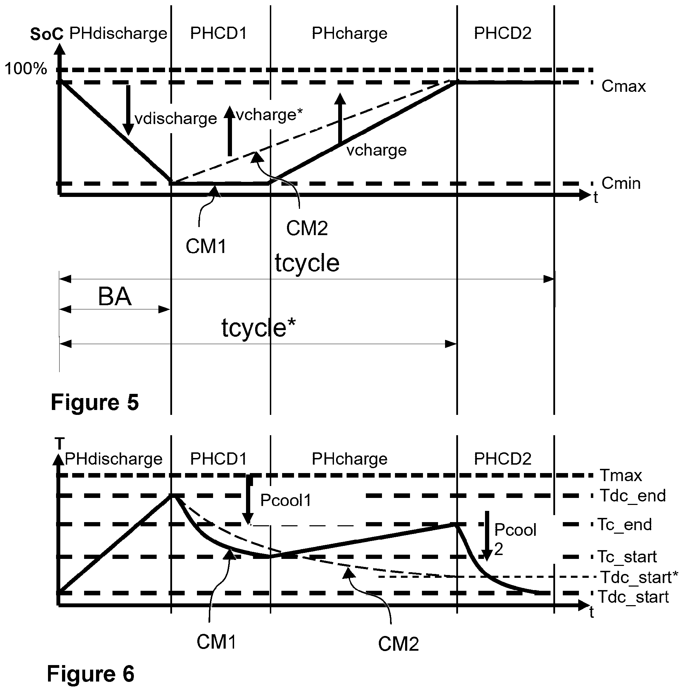

Further improvements in work efficiency are described with reference to figures 5 and 6.

**Figure 5** shows a state of charge of a battery like the battery 14 in the course of a cycle **CM1** of discharging and charging phases and having a cycle time **tcycle.**

**Figure 6** presents corresponding curves of a core temperature of the battery 14.

The cycle begins with discharging during a discharging phase **PHdischarge,** wherein the battery is discharged at a discharging speed **vdischarge,** for example corresponding to the previously mentioned discharging power of 1.25 kW, from a maximum charge **Cmax,** e. g. 90% of the actual battery capacity to a minimum charge **Cmin,** e. g. 0% of the actual battery capacity.

During the discharging phase PHdischarge the battery's core temperature rises from a discharging start temperature **Tdc_start,** for example a temperature close to the ambient temperature Tambient, e. g. 20 °C, to a discharging end temperature **Tdc_end,** for example 70 °C.

Charging cannot start before an allowed charging start temperature **Tc_start,** for example below 45 °C, has been reached. Therefore, during a first cool down phase PHCD1 the battery is actively cooled down by means of the cooling and heating device 36 and corresponding to a first cooling power **Pcool1.**

Once it reaches the allowed charging start temperature Tc_start, it is recharged at a charging speed **vcharge** from the minim charge Cmin to the maximum charge Cmax.

At the end of charging, the battery reaches a charging end temperature **Tc_end.**

Therefore, it is cooled down in a second cool down phase **PHCD2** and corresponding to a second cooling power **Pcool2,** until it reaches the discharging start temperature Tdc_start again, so that the cycle can restart at its beginning, i. e. at the beginning of the discharging phase PHdischarge. It is conceivable that the cooling powers Pcool1 and Pcool2 are equal.

The fraction corresponding to the duration of the phase PHdischarge to the total cycle time tcycle corresponds to the battery availability **BA.** In the example according to figures 5 and 6, the battery availability BA is about 22 %.

Favourably, the charger 22 is configured to charge the battery according to the phases PHCD1 and PHcharge. In particular, it is configured to cool the battery according to the cooling powers Pcool1 and Pcool2 and to charge the battery with an average charging speed of vcharge.

Additionally, figures 5 and 6 present an alternative cycle **CM2.** This cycle is similar to the previously described cycle CM1 but differs in the cool down phases PHCD1 and PHCD2 and in the charging phase PHcharge.

In this embodiment the charger 22 is configured to read out a history of uses of the battery docked in the dock 24, to analyse this history, and to adapt its charging behaviour to this history of uses. In particular, it is configured to read out the types of power tools the battery has been connected to. As an example, the charger 22, by means of its microcontroller 26, may recognize that after a certain number of uses with high-power power tools, e. g. chiseling power tools, a low-power power tool, for example a jobsite vacuum cleaner like the jobsite vacuum cleaner 50, is connected to the battery. These analyses may be run directly on the charger 22. In alternative embodiments, similar analyses may also be run in the cloud. The analyses may make use of properties related to and / or drawn from the digital twin.

It may thus forecast that the battery docked in its dock 24 will be used with the jobsite vacuum cleaner 50. It may be foreseen that for such low-power applications the discharging start temperature may be raised up to a second discharging start temperature **Tdc_start*.**

Furthermore, the charger may be configured to simultaneously cool down and to charge the battery according to a second, decreased charging speed **vcharge*.** The second charging speed vcharge* and the cooling powers Pcool1 are adjusted such that, despite charging, the battery cools down until it reaches the second discharging start temperature Tdc_start*.

In the example shown in figure 6, it can be seen that the second cool down phase PHCD2 is not required any more. Therefore, CM2's cycle time **tcycle*** is, at least on average when considering an average of high-power and low-power cycles, substantially shorter than CM1's cycle time tcycle. Hence, a battery availability relating to cycle CM2 may be substantially higher than CM1's battery availability. Moreover, due to the low second charging speed vcharge*, it can be expected that the battery's lifespan is prolonged.

### Reference signs

- 10: construction site
- 11: power tool
- 12: grip
- 14: battery
- 15: interface
- 16: tool holder
- 18: tool
- 20: motor arrangement
- 21: network adapter
- 22: charger
- 24: dock
- 25: interface
- 26: microcontroller
- 28: processor
- 30: memory
- 32: clock
- 34: network adapter
- 36: heating and cooling device
- 50: power tool
- 52: battery
- 54: network adapter
- 60: energy supply system
- 100: fleet management system
- 102: network adapter
- BA: battery availability
- CM1: cycle
- CM2: cycle
- Cmax: maximum charge
- Cmin: minimum charge
- Cth: thermal capacity
- PHdischarge: discharging phase
- Pcool1: cooling power
- Pcool2: cooling power
- Tambient: ambient temperature
- Tc_start: charging start temperature
- Tc_end: charging end temperature
- Tdc_start: discharging start temperature
- Tdc_start*: discharging start temperature
- Tdc_end: discharging end temperature
- tcycle: cycle time
- tcycle*: cycle time
- tdaytime: daytime
- vcharge: charging speed
- vcharge*: charging speed
- vdischarge: discharging speed

## Claims

1. **Charger (22)** for charging a rechargeable power tool battery (14), **characterized in that** the charger (22) is configured to charge a battery (14) depending on at least one of the use of the battery (14), the use of a power tool (11) the battery (14) previously has been or is to be connected to, or a property of the power tool (11).

2. Charger (22) according to the previous claim, **characterised in that** the charger (22) comprises at least one of an active heating device or an active cooling device (36) for heating or cooling the battery (14) actively.

3. Charger (22) according to one of the previous claims, **characterised in that** the charger (22) is configured such that an average charging speed (vcharge, vcharge*) correlates to an average discharging speed (vdischarge) of the battery (14) when discharged by the power tool (11).

4. Charger (22) according to one of the previous claims, **characterised in that** the charger (22) is configured to charge depending on the type of the power tool (11) or type of an application of the power tool (11).

5. Charger (22) according to one of the previous claims, **characterised in that** the charger (22) is configured to cool down the battery (14) while charging, if a temperature (tbattery) of the battery (14) is above a discharging start temperature (Tdc_start, Tdc_start*).

6. Charger (22) according to one of the previous claims, **characterised in that** the charger (22) is configured to end charging and / or to end a cool down at the discharging start temperature (Tdc_start, Tdc_start*), wherein the discharging start temperature (Tdc_start, Tdc_start*) depends on an ambient temperature (Tambient), the type of power tool (11) and / or the type of application of the power tool (11).

7. Charger (22) according to one of the previous claims, **characterised in that** the charger (22) is configured to start charging at a charging start temperature (Tc_start), wherein the charging start temperature (Tc_start) depends on the ambient temperature (Tambient), the type of power tool (11) and / or the type of application of the power tool (11).

8. Charger (22) according to the previous claim, **characterised in that** the charger (22) is configured to charge the battery (14) depending on at least one of a daytime (tdaytime), a day of year, a week number of year, a month, a season or a location of at least one of the power tool (11), the battery (14), or the charger (22).

9. Charger (22) according to one of the previous claims, **characterised in that** the charger (22) comprises a battery data interface (15) to communicate with the battery (14), in particular for gathering data relating to the use of the battery (14).

10. Charger (22) according to one of the previous claims, **characterised in that** the charger (22) comprises a power tool (11) data interface (15) to communicate with a power tool (11), in particular for gathering data relating to the power tool (11).

11. Charger (22) according to one of the previous claims, **characterised in that** the charger (22) is configured to charge with a charging speed (vcharge) of at least 2C.

12. Charger (22) according to one of the previous claims, **characterized in that** the charger (22) is configured to charge the battery (14) depending on at least one of a set of batteries (14, 52) or a set of power tools (11, 50).

13. Charger (22) according to one of the previous claims, **characterized in that** the charger (22) is configured to charge the battery (14) depending on a digital twin of at least one of the battery (14) or the power tool (11).

14. **Energy supply system (60),** comprising a rechargeable power tool battery (14) and a charger (22) according to one of the previous claims,
wherein the battery (14) has a heat transfer coefficient (Rth) and a thermal capacity (Cth),
wherein the charger (22) is configured to charge the battery (14) with a charging speed (vcharge) and / or to cool the battery (14) with a cooling power (Pcool1, Pcool2),
wherein the heat transfer coefficient (Rth), the thermal capacity (Cth), the charging (start) speed, and / or the cooling power (Pcool1, Pcool2) are configured such that the energy supply system (60) has a battery availability of at least 33% when the battery (14) is discharged with a discharge power of at least 1 kW.

15. Energy supply system according to the previous claim, **characterized in that** the heat transfer coefficient (Rth), the thermal capacity (Cth), the charging speed (vcharge), and / or the cooling power (Pcool1, Pcool2) are configured such that the energy supply system (60) has a battery availability of at least 50% when the battery (14) is discharged with a discharge power (11) of at least 1 kW.
